# EUROPEAN PATENT APPLICATION

(11) **EP 4 789 882 A1**
(43) Date of publication of application: **12.08.2026**
(21) Application number: 26156882.8
(22) Date of filing: 06.02.2026
(51) Int. Cl.: B60G 11/04, B60G 11/27, B60G 9/00, B60B 35/00, B60K 1/00

(54) **IMPROVED SUSPENSION SYSTEM FOR AN E-AXLE**

(30) Priority: 07.02.2025 IT 202500002331
(71) Applicant: IVECO S.P.A., 10156 Torino (IT)
(72) Inventor: WEICHENMEIER, Stefan, 10156 TORINO (IT)
(74) Representative: Studio Torta S.p.A.

(57) **Abstract**

A suspension system (5) for an e-axle (4) of a vehicle (1) comprising a frame (2) provided with at least two side members (2', 2"), the suspension system (5) comprising an axle-holder assembly, a deformable element (8), and an elastic element (9),
the elastic element (9) comprising a first end (9a), a second end (9b) opposed to the first end (9a) and an intermediate portion (9c) comprised between first and second ends (9a, 9b),
the second end (9b) being connected via deformable element (8) to the side member (2', 2"), the intermediate portion (9c) being connected via axle-holder assembly to the e-axle (4),
the first end (9a) being connected by a coupling (11) to one between side members (2', 2''), wherein such coupling (11) allows a rotation about of a centre of rotation (o) defined between the first end (9a) and coupling (11) of the elastic element (9).

## Description

### CROSS-REFERENCE TO RELATED APPLICATIONS

This patent application claims priority from Italian patent application no. 102025000002331 filed on February 7, 2025, the entire disclosure of which is incorporated herein by reference.

### TECHNICAL FIELD

The present invention concerns a suspension for an axle, in particular for an electric axle.

The present invention finds its preferred, although not exclusive, application in heavy vehicles such as trucks. Reference will be made to this application by way of example below.

### BACKGROUND OF THE INVENTION

Vehicle suspensions comprise an assembly of elements configured to reduce the transmission of vibrations which might be transmitted to the frame of the vehicle by the axle because of the profile of the road surface. The performances of a suspension are given by the ability to reduce the transmission of the aforesaid vibrations relative to the driveability of the vehicle, the costs and the weight of the suspension.

Many types of suspensions for heavy vehicles are known, for example merely mechanical suspensions comprising elements such as torsion or anti-roll bars, Panhard rods, or even "V"-shaped bars or "active" suspensions, such as for example the suspensions known as "full-air" or "air-link" suspensions comprising actuators, such as air springs, and a system of sensors connected to an electronic interface designed to control the actuators so as to make up for the stresses arising between the frame and the axle of the vehicle.

However, the aforesaid solutions are provided with many elements and, as a consequence, take up much space and are heavy; furthermore, the "active" suspensions are particularly expensive and need dedicated wirings for the sensors/actuator elements, which, in turn, take up much space and are heavy.

In addition to the above, known suspension systems are challenged by the use of electric axles - so called e-axles - i.e. axles that carries the electric machine on their housing.

E-axle have a huge mass to be suspended with respect to standard axles, therefore the suspension system must be designed for such increase suspended mass.

Moreover, standard designs of e-axles foresees the provision of electric machines on both sides of the housing of the axle along longitudinal direction of the vehicle.

Such provision combined with the standard suspension configuration systems provides a great vertical movement of the e-axle with consequent stresses on cables for electric connection to electric machines and to conduits that provides conditioning fluid thereto.

In view of the above, the need is felt to provide a suspension system configured to have good operative performance while being compact and cost-effective.

In detail, the need is felt to reduce suspended mass and, further, movements imparted to wires/cables connected to operative elements of the e-axle.

The object of the invention is to fulfil the needs discussed above.

An aim of the present invention is to satisfy the above mentioned needs in a cost-effective and optimized manner.

### SUMMARY OF THE INVENTION

The aforementioned aim is reached by an assembly and a vehicle as claimed in the appended set of claims that are integral part of the present description.

### BRIEF DESCRIPTION OF DRAWINGS

For a better understanding of the present invention, a preferred embodiment is described in the following, by way of a non-limiting example, with reference to the attached drawings wherein:
- Figure 1 is a top schematic view of a portion of a vehicle provided with an e-axle and a suspension system according to the invention;

- Figure 2 is a lateral schematic view of the suspension system of Figure 1;
- Figure 3 is a top schematic view of the e-axle of Figure 1;

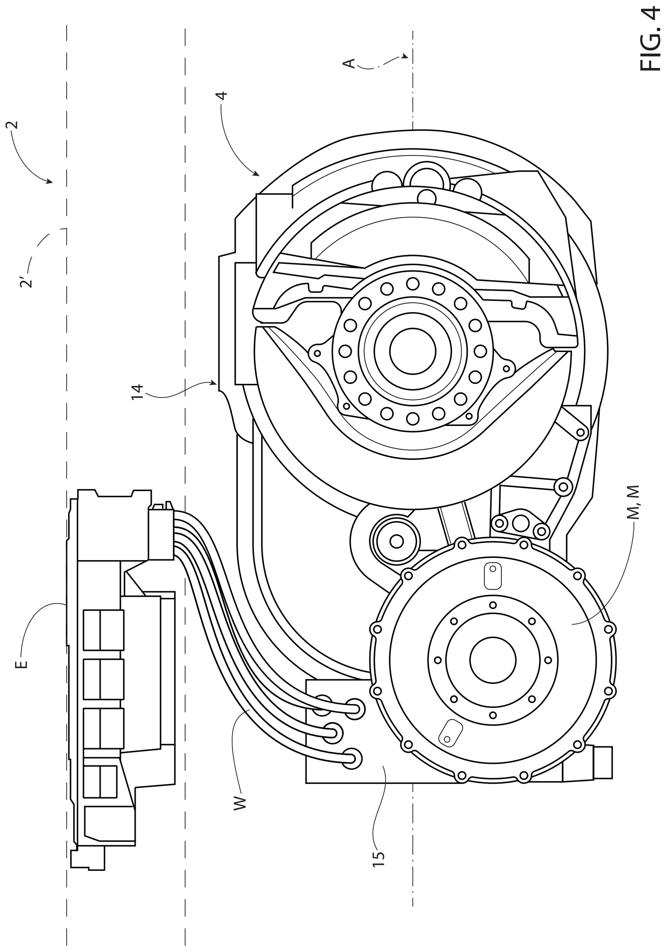

- Figure 4 is an enlarged lateral schematic view of a portion of the e-axle of Figure 3; and
- Figure 5 is a perspective view of a portion of the e-axle and suspension system according to the invention.

### DETAILED DESCRIPTION OF THE INVENTION

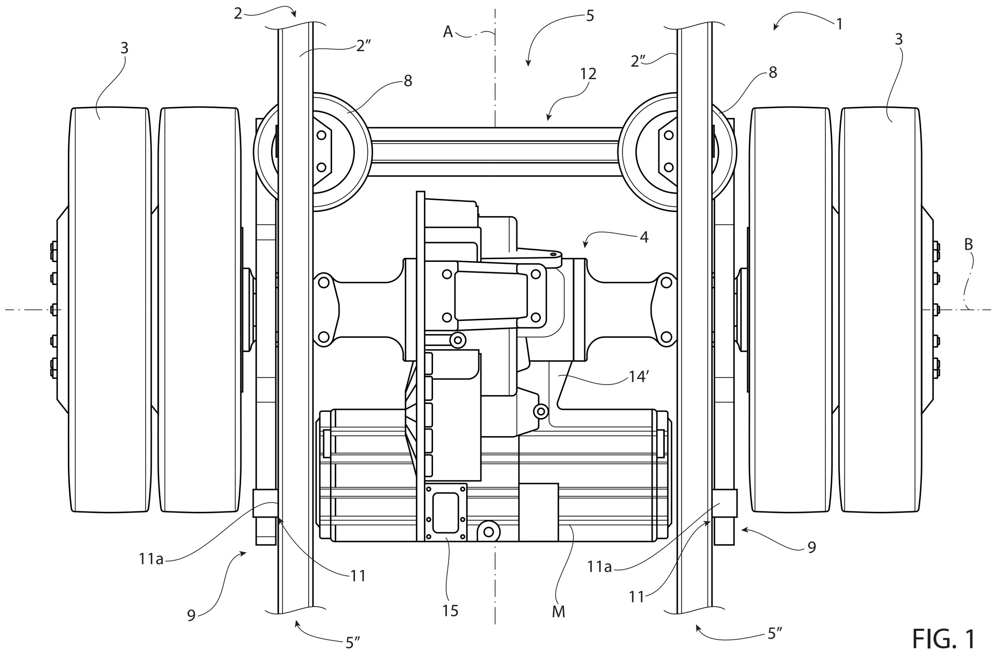

Figure 1 shows a vehicle 1 comprising a frame 2 movable on ground via wheels 3. In detail, the frame 2 comprise a right side member 2' and a left side member 2" extending spaced one with respect to the other along a longitudinal axis A of the vehicle and connected together by transversal members (not shown).

The wheels 3 are connected to one another by means of an axle 4, in particular an electric axle, e-axle, which is connected to the frame 2 of the vehicle, i.e. to the side members 2', 2'', by means of a suspension system 5.

The e-axle 4 extends along a transversal axis B perpendicular to longitudinal axis A.

The suspension system 5 comprises a right side 5' and a left side 5'' with respect to longitudinal axis A. Such sides 5', 5'' are connected one to the other as described more in detail hereinafter. Since such sides 5', 5'' are realized in the same manner, only one will be described for sake of brevity.

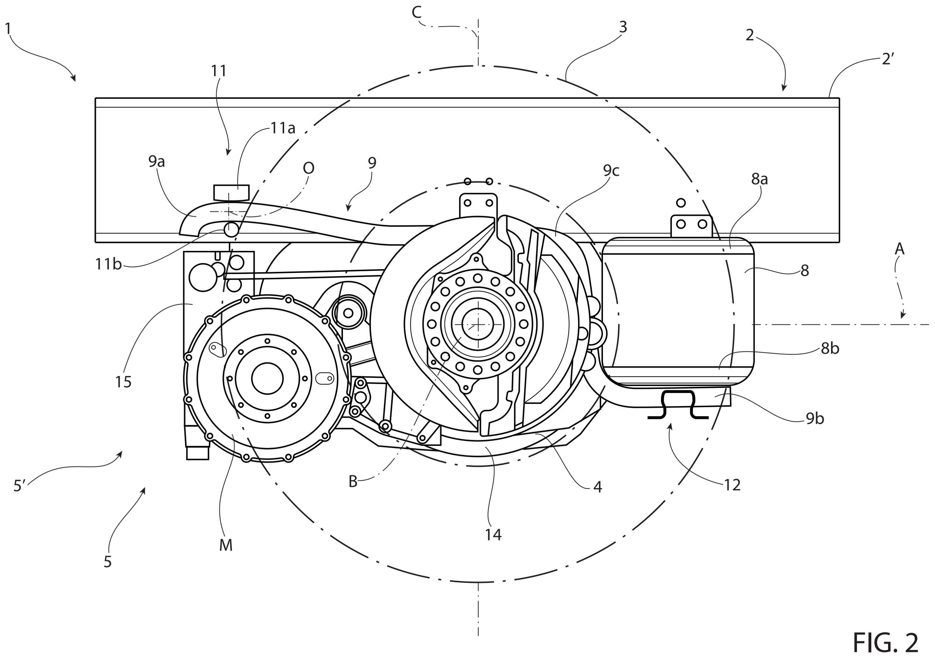

Making reference to figure 2, each side 5', 5'' comprises essentially an axle-holder assembly (not shown), a deformable element and an elastic element 9.

The elastic element 9 is preferably a leaf spring, more preferably having a rectangular cross section.

The elastic element 9 comprises a first end 9a and a second end 9b that are spaced along longitudinal axis A and an intermediate portion 9c comprised therebetween. In detail, the first end 9a is placed rearward with respect to e-axle, i.e. to respect to a standard movement of the vehicle.

Preferably, both the first and second ends 9a, 9b have a linear shape, in particular they are vertically distanced one with respect to the other so that the first end is placed above e-axle 4, while the second end 9b is placed in a lower position thereof.

Advantageously, the intermediate portion 9c has a "L" shape thereby being in contact with a lateral and upper side of the e-axle. Accordingly, preferably, the elastic element is a Z-shaped leaf spring.

In detail, the first end 9a is connected to a respective side member 2', 2"; such connection, in the example described herein, is realized by means of a coupling 11 carried by the frame 2. The second end 9b is connected to the deformable element 8 and the intermediate portion 9c is connected to the e-axle 4 via the axle-holder assembly.

The coupling 11 is laterally fixed, for example by means of threaded means, to the respective side member 2', 2'' and perpendicularly extends over from the latter and comprises an upper portion 11a and a lower portion 11b.

In the disclosed embodiment, such upper and lower portion 11a, 11b are realized as separated protrusion, clearly they can be realized as a single element defining an opening four housing a portion of the elastic element 9.

In detail, the first end 9a of the elastic element 9 cooperates at contact with coupling 11. More preferably, at least a lower surface of the upper portion 11a and/or at least an upper surface of the lower portion 11b defines a curved profile configured to cooperate at contact with the first end 9a.

In detail, the lower portion 11b comprises a circular pin, while the upper portion 11a comprises a curved prismatic pin.

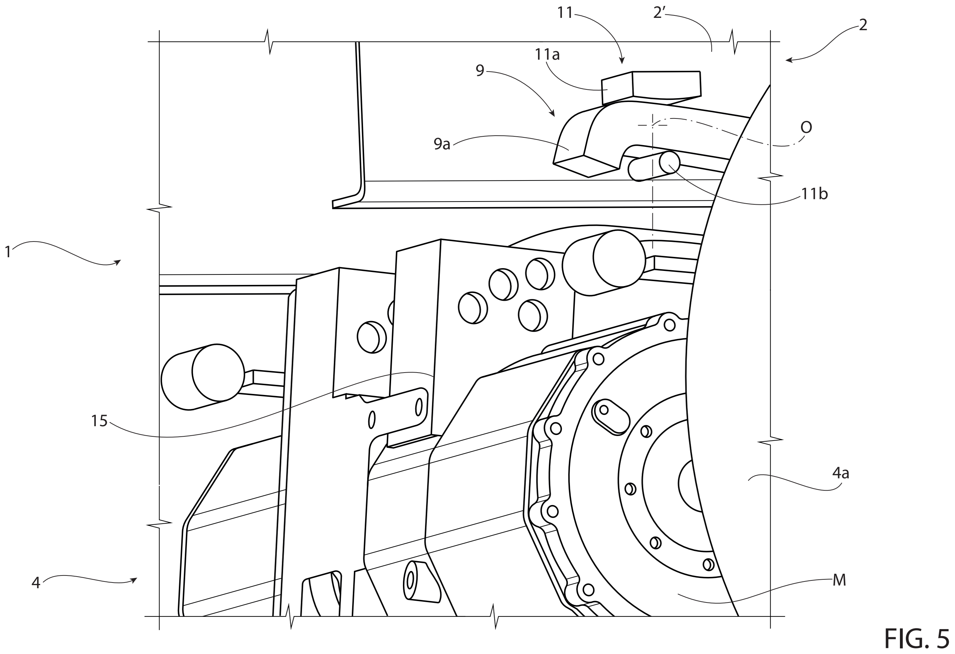

In particular, such contact cooperation allows the first end 9a to move about the coupling, similarly to a hinge. In detail, the centre of rotation O (see figure 5) will be comprised, in the disclosed embodiment, in the contact point between the lower portion 11b and the first end 9a.

The deformable element 8 comprises a bellow, in particular an air bellow, and comprises an upper portion 8a and a lower portion 8b along a vertical axis C, perpendicular to both longitudinal and transversal axes A, N.

The deformable element 8 is connected at the lower portion 8b, preferably in a fixed manner to the second end 9b of the elastic element 9 while the upper portion 8a is connected, preferably in a fixed manner, to the respective side member 2', 2''. Such fixed connections may be realized by fixing means such as threaded elements.

The suspension 7 further comprises a crossbeam 12, which is connected between the deformable elements and the second end 9b of the elastic element 9. In particular, such crossbeam 12 connects the aforementioned elements rigidly, e.g. by means of threaded elements, such as bolts.

The crossbeam 12 is preferably manufactured as a profiled element and connects the right and left sides 5', 5' of the suspension 5. More preferably, the crossbeam 12 is an omega-shaped profiled element, therein the omega-shape is positioned so have its foot faced to the ground.

The axle-holder assembly can be realized in any known manner and is configured to allow rigid connection to the intermediate portion 9c of the elastic element 9 to the e-axle 4.

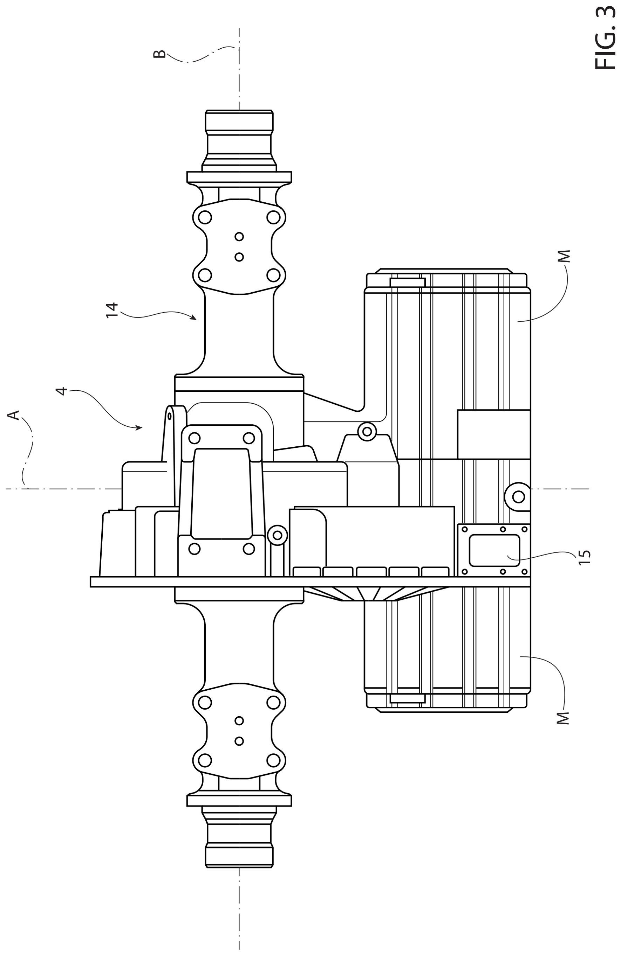

As can be shown in figure 3, the e-axle 4 comprises a housing 14 configured to define a space housing driving shafts (not shown) connected to the wheels 3 and carrying at least one electric machine M. The housing 14 houses in the aforementioned space a transmission connecting the at least one electric machine to the drive shaft and further not disclosed for sake of brevity and being realized in many possible configurations.

In the disclosed embodiment (see for instance figure 3), the e-axle 4 comprises a pair of electric machines M that are faced one with respect to the other along transversal axis B, i.e. they are carried by the housing 14 on the same side along longitudinal axis A and one adjacent to the other along transversal axis B.

In particular, the electric machines M are carried by the housing 14 on the front side of the e-axle 4, i.e. on the front side of the vehicle according to the standard motion thereof.

The at least one electric machine M is electrically connected by wires W to electric devices E, such as inverter, for their operation and fluidly connected by conduit (not shown) to fluid-operated systems (not shown) for their cooling. Such electric devices or such fluid-operated systems are carried by the frame 2 and, as said, connected by wires/conduits W to the electric machine M.

The e-axle 4 comprises a connection portion 15 extending from the housing 14 and configured to support the wires/conduits that need to be connected to the at least one electric machine M.

Such connection portion 15 comprises therefore a plurality of holes configured to allow housing of such wire/conduits and, if needed, the passage towards the inner space housing electric machine M.

In detail, the connection portion 15 is realized a flanged portion extending vertically along vertical axis C over the housing 14.

Such connection portion 15 (see figures 2, 5) is placed below and in proximity of the connection between coupling 11 and elastic element 9.

Preferably, such connection portion 15 is placed underneath such connection and more preferably is placed about the pivoting centre of e-axle 4.

The operation of the embodiment of the invention as described above is the following.

The e-axle 4 during the movement on the road tends to move. In particular, the housing 14 tends to move vertically opposed by the force exerted by deformable element 8. Possible torsional movements are contained by the transversal crossbeam element 12. The vertical movement is furthermore compensated by the elastic element 9 that also acts as longitudinal support element. In particular, the first end 9 of the elastic element 9 rotates about axis O. Such rotation provides a very small vertical movement of the mass of the e-axle that is concentrated in the vicinity of the rotation point and therefore has a limited displacement along vertical axis C. In particular, the connection portion 15 that further extends vertically about the rotation points O, have a small vertical movement thereby allowing minimum movement of cables/wires W.

In view of the foregoing, the advantages of an assembly and a vehicle according to the invention are apparent.

Thanks to the claimed suspension arrangement and the claimed e-axle, the movement of the e-axle is rotative about the hinge point of the elastic element therefore reducing the overall movement of the e-axle.

Such reduced movement improves the maneuverability and the comfort for the operator. Moreover, the reduced movement reduces the stresses on suspension component thereby increasing its useful life.

Furthermore, the reduced movement in combination of the presence of a flanged portion in a specific position of the e-axle provides to reduce movement of wires/cables connected thereof, thereby reducing possible electrical damages or fluid leakages.

The proposed arrangement is furthermore particularly compact and use fewer components with respect to known arrangements. Indeed, the suspension system avoid the presence of a front hanger thereby consistently reducing the space consumed by the suspension system along longitudinal axis.

Moreover, the reduced rebounded movement decrease the need of space in the vertical direction thereby allowing the storing of other elements.

It is clear that modifications can be made to the described assembly and vehicle which do not extend beyond the scope of protection defined by the claims.

For example, more flanged portions can be present and different typologies of wires/conduits can be connected to the one or plurality of electric machines M.

Clearly, the elastic element and the damper can vary of the suspension system can comprise further element or couplings.

Moreover, the proposed frame and wheel arrangement or the shape of the e-axle may be different with respect to the shown one.

## Claims

1. Assembly comprising a suspension system (5) and an e-axle (4) for a vehicle, said vehicle (1) comprising a frame (2) provided with at least two side members (2', 2''),
said e-axle (4) comprising a housing (14) defining a space for housing driving shafts and at least one electric machine (M) carried by said housing (14), said e-axle (4) comprising a connection portion (15) configured to support cables/wires (W) for connecting electrical devices/fluid-operated systems carried by said vehicle,
said suspension system (5) connecting said e-axle (4) to said side members (2', 2'') and comprising a left side (5') and a right side (5''), each comprising an axle-holder assembly, a deformable element (8), and an elastic element (9),
said elastic element (9) comprising a first end (9a), a second end (9b) opposed to the first end (9a) along said longitudinal axis (A) and an intermediate portion (9c) comprised between said first and second ends (9a, 9b),
said second end (9b) being connected via said deformable element (8) to said side member (2', 2"), said intermediate portion (9c) being connected via said axle-holder assembly to said e-axle (4),
said first end (9a) being connected by a coupling (11) to one between said side members (2', 2"), wherein said coupling (11) allows a rotation about of a centre of rotation (O) defined between said first end (9a) and said coupling (11) of said elastic element (9),
wherein said connection portion (15) of said e-axle (4) extends near said coupling (11) of said suspension system (5).

2. Assembly according to claim 1, wherein said deformable element (8) deforms along a vertical axis (C) direction perpendicular to said longitudinal axis (A).

3. Assembly according to claim 1 or 2, wherein said deformable element (8) is an air bellow.

4. Assembly according to any of the preceding claims, wherein said elastic element (9) is a leaf-spring.

5. Assembly according to claim 4, wherein said leaf-spring is Z-shaped.

6. Assembly according to claim 4 or 5, wherein said leaf-spring has a rectangular cross-section.

7. Assembly according to any of the preceding claims, wherein said coupling (11) comprises at least one portion (11a, 11b), said first end (9a) cooperating at contact with said at least one portion (11a, 11b).

8. Assembly according to claim 7, wherein said upper and lower portions (11a, 11b) are protrusions extending over said side member (2', 2'') along a trasversal axis (B) direction perpendicular to said longitudinal axis direction.

9. Assembly according to claim 8, wherein said protrusions define at least one surface that is curved.

10. Assembly according to any of the preceding claims, comprising a cross-member (12) connecting said second ends (9b) and said deformable elements (8) of said sides (5', 5'').

11. Assembly according to claim 10, wherein said cross-member (12) is a profiled element.

12. Assembly according to claim 10 or 11, wherein said profiled element is placed underneath said second end (9b) along a vertical axis (C).

13. Assembly according to any of the preceding claims, wherein said connection portion (15) extends from said housing (14) along said vertical axis (C) near said at least one electric machine (M).

14. Assembly according to any of the preceding claims, wherein said connection portion (15) lies about the pivoting point of said e-axle (4).

15. Vehicle comprising an assembly according to any of the preceding claims.
